# EUROPÄISCHE PATENTSCHRIFT

(11) **EP 4 325 113 B1**
(45) Veröffentlichungstag und Bekanntmachung des Hinweises auf die Patenterteilung: **26.02.2025**
(21) Anmeldenummer: 22190799.1
(22) Anmeldetag: 17.08.2022
(51) Int. Cl.: F21S 41/143, F21S 41/151, F21S 41/153, F21S 41/255, F21S 41/32, F21S 41/43, F21S 41/663, F21S 41/20, F21S 41/25, F21S 41/141

(54) **BELEUCHTUNGSVORRICHTUNG FÜR EINEN KRAFTFAHRZEUGSCHEINWERFER**
ILLUMINATION DEVICE FOR A MOTOR VEHICLE HEADLIGHT
DISPOSITIF D'ÉCLAIRAGE POUR UN PHARE DE VÉHICULE AUTOMOBILE

(43) Veröffentlichungstag der Anmeldung: 21.02.2024
(73) Patentinhaber: ZKW Group GmbH, 3250 Wieselburg (AT)
(72) Erfinder: Park, Taeyang, 22696 Incheon (KR); Schager, Alexander, 3270 Scheibbs (AT); Mandl, Bernhard, 1100 Wien (AT); Kosmas, Kyriakos, 3681 Hofamt Priel (AT)
(74) Vertreter: Patentanwaltskanzlei Matschnig & Forsthuber OG

(56) Entgegenhaltungen:
- EP-A1- 3 211 292
- EP-A1- 3 361 146
- CN-U- 207 350 141
- DE-A1- 102008 015 246
- US-A1- 2008 239 741
- US-A1- 2010 309 678
- US-A1- 2013 051 054

## Beschreibung

Die Erfindung betrifft eine Beleuchtungsvorrichtung für einen Kraftfahrzeugscheinwerfer zur Erzeugung einer asymmetrischen Abblendlicht-Lichtverteilung, wobei die Abblendlicht-Lichtverteilung eine homogene Lichtverteilung im Bereich unterhalb des Schnittpunkts HV der Horizontallinie H-H und der Vertikallinie V-V eines Messschirms zur Messung einer Lichtverteilung bis zumindest -3° entlang der Vertikallinie V-V aufweist, wobei die Beleuchtungsvorrichtung Folgendes umfasst:
- ein Leuchtmittel zur Abstrahlung von Licht,
- eine Blende mit einer Blendenkante, wobei die Blende derart angeordnet ist, dass die Blendenkante zur Erzeugung einer asymmetrischen Abblendlicht-Lichtverteilung mitwirkt, und wobei die Blende einen ersten und einen zweiten Blendenabschnitt umfasst, wobei der zweite Blendenabschnitt zum ersten Blendenabschnitt - gesehen in einem korrekt eingebauten Zustand der Beleuchtungsvorrichtung in einem Kraftfahrzeug - erhöht angeordnet ist, und wobei der erste und der zweite Blendenabschnitt durch einen Verbindungsabschnitt der Blende miteinander verbunden sind,
- ein Projektionsoptiksystem, umfassend eine optische Achse, welches Projektionsoptiksystem eingerichtet ist, die durch die Blende in Kombination mit dem Leuchtmittel erzeugte Abblendlicht-Lichtverteilung in Richtung einer Hauptabstrahlrichtung vor die Beleuchtungsvorrichtung abzubilden.

Weiters betrifft die Erfindung einen Kraftfahrzeugscheinwerfer umfassend zumindest eine erfindungsgemäße Beleuchtungsvorrichtung.

Üblicherweise sind Blenden mit einer Blendenkante zur Erzeugung einer Abblendlicht-Lichtverteilung in Beleuchtungsvorrichtungen derart ausgebildet, dass die Oberseite Licht, welches vom Leuchtmittel abgestrahlt wird, reflektiert und ablenkt.

Insbesondere der Verbindungsabschnitt der Blende sorgt dafür, dass Licht derart abgelenkt wird, dass dieses nicht mehr auf das Projektionsoptiksystem gelenkt wird und daher zur Erzeugung bzw. Formung der Abblendlicht-Lichtverteilung fehlt.

Gerade im Bereich unterhalb der Hell-Dunkel-Grenze in der Umgebung des Schnittpunkts HV, also unterhalb des asymmetrischen Anstiegs bzw. am Beginn des Anstiegs der Abblendlicht-Lichtverteilung, kommt es daher zu Inhomogenitäten, welches zu einem Schattenbereich unterhalb des Schnittpunkts HV führt.

Der Begriff "homogen" bedeutet in diesem Zusammenhang das Fehlen von sprunghaften Änderungen zwischen hellen und dunklen Bereichen in der Lichtverteilung.

DE 10 2008 015246 A1 und US 2008/239741 A1 offenbaren bekannte Beleuchtungsvorrichtungen für einen KFZ-Scheinwerfer.

Es ist eine Aufgabe der Erfindung eine verbesserte Beleuchtungsvorrichtung bereitzustellen.

Diese Aufgabe wird mit den Merkmalen von Anspruch 1 gelöst.

Es kann vorgesehen sein, dass die Längserstreckung des Verbindungsabschnitts entlang der Hauptabstrahlrichtung ein Drittel, vorzugsweise ein Viertel, der Brennweite des Projektionsoptiksystems ist.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Unter "Hauptabstrahlrichtung" ist die Richtung zu verstehen, in der das Leuchtmittel infolge seiner Richtwirkung am stärksten bzw. am meisten Licht abstrahlt.

Vorteilhafterweise fällt die Hauptabstrahlrichtung mit der optischen Achse des Projektionsoptiksystems zusammen.

Es kann vorgesehen sein, dass die Blendenkante eine Asymmetriekante aufweist, welche zur Erzeugung des asymmetrischen Anstiegs in der Abblendlicht-Lichtverteilung mitwirkt, wobei die Endkante der Ablenkfläche die Asymmetriekante der Blendenkante bildet.

Es kann vorgesehen sein, dass sich der erste und der zweite Blendenabschnitt jeweils - gesehen in einem korrekt eingebauten Zustand der Beleuchtungsvorrichtung in einem Kraftfahrzeug - im Wesentlichen in einer Horizontalebene erstrecken, wobei der erste und der zweite Blendenabschnitt einen Versatz entlang einer zweiten virtuellen Achse aufweisen, wobei die zweite virtuelle Achse orthogonal zur ersten virtuellen Achse und der Hauptabstrahlrichtung angeordnet ist.

Es kann vorgesehen sein, dass das Leuchtmittel aus mehreren Leuchtdioden ausgebildet ist.

Es kann vorgesehen sein, dass das Leuchtmittel eine oder mehrere Vorsatzoptiken, vorzugsweise Kollimatoren zur Parallelisierung von Lichtstrahlen, umfasst.

Es kann vorgesehen sein, dass sich der Bereich der homogenen Lichtverteilung in der Abblendlicht-Lichtverteilung unterhalb des Schnittpunkts HV sich entlang der Horizontallinie H-H von zumindest -4° bis zumindest +4° erstreckt.

Die Aufgabe wird ebenso gelöst durch einen Kraftfahrzeugscheinwerfer umfassend zumindest eine erfindungsgemäße Beleuchtungsvorrichtung.

Nachfolgend wird die Erfindung anhand von beispielhaften Zeichnungen näher erläutert. Hierbei zeigt
- Fig. 1: eine Seitenansicht einer beispielhaften Beleuchtungsvorrichtung, umfassend ein Leuchtmittel, eine Blende und ein Projektionsoptiksystem, wobei das Leuchtmittel in Kombination mit der Blende eine Abblendlicht-Lichtverteilung erzeugt, welche von dem Projektionsoptiksystem in Richtung einer Hauptabstrahlrichtung vor die Beleuchtungsvorrichtung abgebildet wird,
- Fig. 2: die Beleuchtungsvorrichtung aus Fig. 1 in einer perspektivischen, rückwärtigen (Leuchtmittel-seitigen entlang Richtung der Hauptabstrahlrichtung) Ansicht von oben;
- Fig. 3: eine perspektivische Ansicht der Blende aus dem Beispiel aus Fig. 1, wobei die Blende eine Blendenkante aufweist, welche zur Erzeugung der Abblendlicht-Lichtverteilung mitwirkt, wobei die Blende einen ersten und einen zweiten Blendenabschnitt aufweist, welche durch einen Verbindungsabschnitt miteinander verbunden sind, und wobei der Verbindungsabschnitt eine Ablenkfläche aufweist, welche eingerichtet ist, zumindest einen Teil des Lichts des Leuchtmittels, welches auf die Ablenkfläche eintrifft, auf das Projektionsoptiksystem umzulenken,
- Fig. 4: eine perspektivische Ansicht der Blende aus Fig. 3 von hinten, wobei die Ablenkfläche sich entlang einer Ebene erstreckt, welche einen Flächenvektor aufweist, welcher zur Hauptabstrahlrichtung und zu einer ersten virtuellen Achse, welche orthogonal zur Hauptabstrahlrichtung und in einer Horizontalebene gelegen ist, jeweils einen Winkel einschließt,
- Fig. 5: den von dem Flächenvektor und der ersten virtuellen Achse eingeschlossenen ersten Winkel gesehen in Hauptabstrahlrichtung,
- Fig. 6: den von dem Flächenvektor und der Hauptabstrahlrichtung eingeschlossenen zweiten Winkel gesehen entlang der ersten virtuellen Achse, wobei die Hauptabstrahlrichtung nach links zeigt, d.h. ausgehend von einem rechtshändigen kartesischen Koordinatensystem (wobei die Hauptabstrahlrichtung der x-Achse entspricht) gesehen entgegen der y-Achse bzw. entgegen der positiven Richtung der y-Achse,
- Fig. 7: eine Abblendlicht-Lichtverteilung erzeugt durch eine Beleuchtungsvorrichtung aus dem Stand der Technik, wobei der Bereich unterhalb des Schnittpunktes HV inhomogen ist, und
- Fig. 8: eine Abblendlicht-Lichtverteilung erzeugt durch eine erfindungsgemäße Beleuchtungsvorrichtung, wobei der Bereich unterhalb des Schnittpunktes HV homogen ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

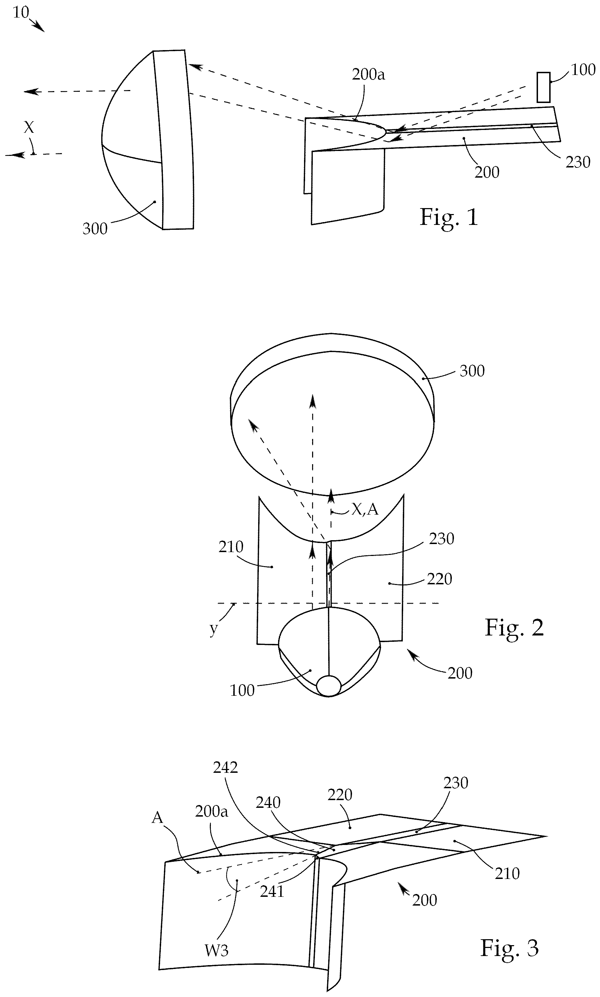

**Fig. 1** zeigt eine beispielhafte Beleuchtungsvorrichtung **10** für einen Kraftfahrzeugscheinwerfer zur Erzeugung einer asymmetrischen Abblendlicht-Lichtverteilung **50,** wobei die Abblendlicht-Lichtverteilung **50** eine homogene Lichtverteilung im Bereich **51** unterhalb des Schnittpunkts HV der Horizontallinie H-H und der Vertikallinie V-V eines Messschirms zur Messung einer Lichtverteilung bis zumindest -3° entlang der Vertikallinie V-V aufweist.

Die Beleuchtungsvorrichtung **10** umfasst ein Leuchtmittel **100** zur Abstrahlung von Licht, wobei im gezeigten Beispiel das Leuchtmittel **100** als mehrerer Leuchtdioden ausgebildet ist. Selbstverständlich kann das Leuchtmittel auch anderweitig ausgebildet sein. Insbesondere kann das Leuchtmittel **100** eine Vielzahl matrixartig neben- und/oder übereinander angeordneter Leuchtdioden aufweisen. Die Leuchtdioden sind vorzugsweise einzeln ansteuerbar, sodass sie individuell ein- und ausgeschaltet und/ oder gedimmt werden können. Die Ansteuerung der Leuchtdioden erfolgt vorzugsweise automatisch (z.B. durch ein Steuergerät gesteuert).

Weiters umfasst die Beleuchtungsvorrichtung **10** eine Blende **200** mit einer Blendenkante **200a,** wobei die Blende **200** derart angeordnet ist, dass die Blendenkante **200a** zur Erzeugung einer asymmetrischen Abblendlicht-Lichtverteilung **50** mitwirkt.

Die Blende **200** umfasst einen ersten und einen zweiten Blendenabschnitt **210, 220,** welche in unter anderem in **Fig. 2** zu sehen sind. Der zweite Blendenabschnitt **220** ist zum ersten Blendenabschnitt **210** - gesehen in einem korrekt eingebauten Zustand der Beleuchtungsvorrichtung in einem Kraftfahrzeug - erhöht angeordnet, wobei der erste und der zweite Blendenabschnitt **210, 220** durch einen Verbindungsabschnitt **230** der Blende **200** miteinander verbunden sind.

Ferner umfasst die Beleuchtungsvorrichtung **10** ein Projektionsoptiksystem **300,** welches eingerichtet ist, die durch die Blende **200** in Kombination mit dem Leuchtmittel erzeugte Abblendlicht-Lichtverteilung **50** in Richtung einer Hauptabstrahlrichtung **X** vor die Beleuchtungsvorrichtung **10** abzubilden. Das Projektionsoptiksystem **300** ist im gezeigten Beispiel als eine Projektionslinse ausgebildet. Die Projektionslinse bzw. das Projektionsoptiksystem **300** projiziert ein Bild einer im Inneren der Beleuchtungsvorrichtung **10** im Bereich eines Fokalbereichs (z.B. einer Brennebene) des Projektionsoptiksystems **300** erzeugten Abblendlicht-Lichtverteilung vor die Beleuchtungsvorrichtung **10.**

Die Blende **200** ist starr ausgebildet, wobei die Blendenkante **200a** im Fokalbereich des Projektionsoptiksystems **300** (einer Brennebene bzw. einem Brennpunkt oder eine Brennpunktwolke bzw. Petzval-Fläche) angeordnet ist.

**Fig. 3** zeigt die Blende **200** in einer perspektivischen Ansicht, wobei zu erkennen ist, dass der Verbindungsabschnitt **230** der Blende eine Ablenkfläche **240** mit einer Endkante **241** aufweist, welche Endkante **241** einen Abschnitt der Blendenkante **200a** der Blende **200** bildet.

Wie in den Figuren, insbesondere in **Fig. 3** zu sehen ist, weist die Blendenkante **200a** der Blende **200** eine Asymmetriekante aufweist, welche zur Erzeugung des asymmetrischen Anstiegs in der Abblendlicht-Lichtverteilung **50** mitwirkt, wobei die Endkante **241** der Ablenkfläche **240** diese Asymmetriekante der Blendenkante **200a** bildet.

Der erste und der zweite Blendenabschnitt **210, 220** erstrecken sich jeweils - gesehen in einem korrekt eingebauten Zustand der Beleuchtungsvorrichtung in einem Kraftfahrzeug - im Wesentlichen in einer Horizontalebene, wobei der erste und der zweite Blendenabschnitt **210, 220** einen Versatz entlang einer zweiten virtuellen Achse z aufweisen, wobei die zweite virtuelle Achse z orthogonal zur ersten virtuellen Achse y und der Hauptabstrahlrichtung **X** angeordnet ist. Ferner umfasst die Ablenkfläche **240** eine Seitenkante **242,** welche den zweiten Blendenabschnitt **220** abschnittsweise begrenzt und die Endkante **241** schneidet, wobei die Seitenkante **242** einen dritten Winkel **W3** mit der optischen Achse **A** des Projektionsoptiksystems **300** von 15° bis 20° einschließt. Die Blende **200** ist dabei in der optischen Achse **A** gelegen, wobei das Projektionsoptiksystem **300** derart angeordnet ist, dass die optische Achse **A** den Schnittpunkt HV des Messschirms schneidet.

Der in Hauptabstrahlrichtung **X** betrachtete linker Abschnitt bzw. der erste Blendenabschnitt **210** ist, wie bereits geschildert, geringfügig unterhalb eines rechten Abschnitts bzw. des zweiten Blendenabschnitts **220** angeordnet. Der Verbindungsabschnitt **230** verbindet die beiden Abschnitte miteinander, sodass sich gewissermaßen eine Stufe bzw. ein schräger Übergang zwischen den Abschnitten ergibt.

Die Längserstreckung des Verbindungsabschnitts **230** entlang der Hauptabstrahlrichtung ist in den gezeigten Figuren ein Drittel der Brennweite des Projektionsoptiksystems 300.

Durch den vorderen Rand des linken Abschnitt bzw. der Kante des ersten Blendenabschnitts **210** wird bei Erzeugung einer Abblendlicht-Lichtverteilung nach der Abbildung durch das Projektionsoptiksystem **300** ein erhöhter Abschnitt der asymmetrischen Helldunkelgrenze auf der eigenen Verkehrsseite bei Rechtsverkehr erzeugt. Dementsprechend ergibt sich durch den vorderen Rand bzw. der Kante des zweiten Blendenabschnitts **220** ein abgesenkter Abschnitt der asymmetrischen Helldunkelgrenze auf der Gegenverkehrsseite.

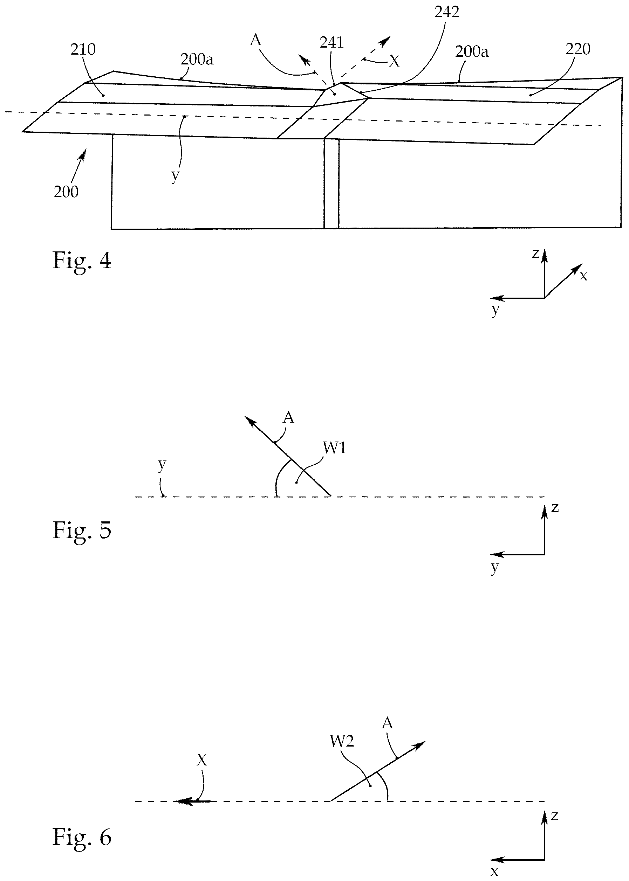

Zur Hauptabstrahlrichtung **X** ist eine erste virtuelle Achse y orthogonal angeordnet, wobei die erste virtuelle Achse **y** - gesehen in einem korrekt eingebauten Zustand der Beleuchtungsvorrichtung in einem Kraftfahrzeug - in einer Horizontalebene angeordnet ist, beispielsweise zu sehen in **Fig.** 2 oder **Fig. 4****.**

Die Ablenkfläche **240** erstreckt sich entlang einer flachen Ebene, wobei die Ebene einen Flächenvektor **A** aufweist, wie in **Fig. 4** zu erkennen ist. Der Flächenvektor **A** schließt gesehen in Hauptabstrahlrichtung **X** einen ersten Winkel **W1** von 1° bis 3°, vorzugsweise von 2°, zur ersten Achse **y** ein, was in **Fig. 5** dargestellt ist.

Ferner schließt der Flächenvektor **A** gesehen entlang der ersten Achse **y** einen zweiten Winkel **W2** von 1° bis 3°, vorzugsweise von 2°, zur Hauptabstrahlrichtung **X** ein, um zumindest einen Teil des Lichts des Leuchtmittels **100,** welches auf die Ablenkfläche **240** einfällt, in Richtung des Bereichs **51** unterhalb des Schnittpunkts HV bis zumindest -3° entlang der Vertikallinie V-V zu lenken. Wie in **Fig. 6** zu sehen ist, zeigt die Hauptabstrahlrichtung **X** nach links, d.h. ausgehend von einem rechtshändigen kartesischen Koordinatensystem (wobei die Hauptabstrahlrichtung X der x-Achse entspricht) wird entgegen der y-Achse bzw. entgegen der positiven Richtung der y-Achse gesehen.

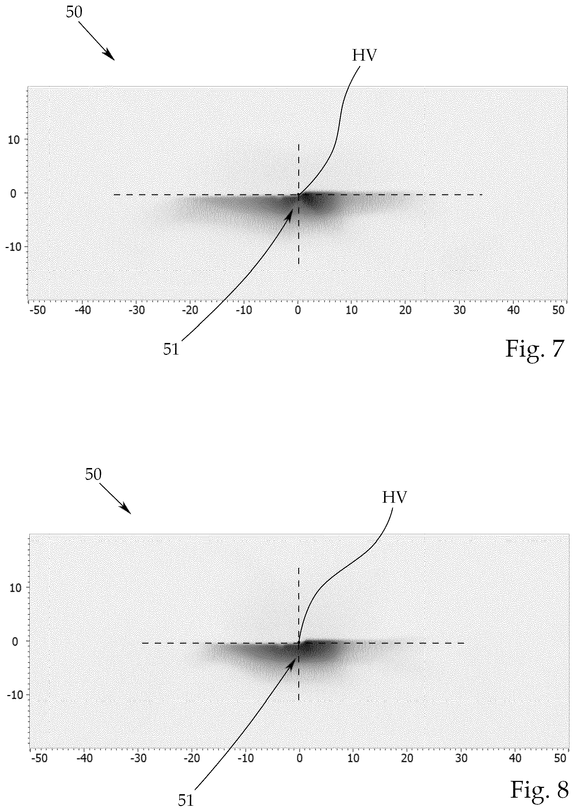

**Fig. 7** zeigt eine Abblendlicht-Lichtverteilung **50** erzeugt durch eine Beleuchtungsvorrichtung aus dem Stand der Technik, wobei zu sehen ist, dass der Bereich **51** unterhalb des Schnittpunkts HV inhomogen ist. Der Bereich **51** kann sich in der Abblendlicht-Lichtverteilung **50** unterhalb des Schnittpunkts HV entlang der Horizontallinie H-H von zumindest -3° bis zumindest +3° erstrecken.

**Fig. 8** zeigt eine Abblendlicht-Lichtverteilung **50** erzeugt durch eine erfindungsgemäße Beleuchtungsvorrichtung **10,** wobei zu sehen ist, dass der Bereich **51** unterhalb des Schnittpunkts HV im Vergleich zu **Fig. 7** homogen ist.

**LISTE DER BEZUGSZEICHEN**

| | |
|---|---|
| Beleuchtungsvorrichtung... | 10 |
| Abblendlicht-Lichtverteilung... | 50 |
| Bereich... | 51 |
| Leuchtmittel... | 100 |
| Blende... | 200 |
| Blendenkante... | 200a |
| Erster Blendenabschnitt... | 210 |
| Zweiter Blendenabschnitt... | 220 |
| Verbindungsabschnitt... | 230 |
| Ablenkfläche... | 240 |
| Endkante... | 241 |
| Seitenkante... | 242 |
| Projektionsoptiksystem... | 300 |
| Hauptabstrahlrichtung... | X |
| Virtuelle Achse... | y |
| Flächenvektor ... | A |
| Erster Winkel... | W1 |
| Zweiter Winkel... | W2 |
| Dritter Winkel... | W3 |

## Patentansprüche

1. Beleuchtungsvorrichtung (10) für einen Kraftfahrzeugscheinwerfer zur Erzeugung einer asymmetrischen Abblendlicht-Lichtverteilung (50), wobei die Abblendlicht-Lichtverteilung (50) eine homogene Lichtverteilung im Bereich (51) unterhalb des Schnittpunkts HV der Horizontallinie H-H und der Vertikallinie V-V eines Messschirms zur Messung einer Lichtverteilung bis zumindest -3° entlang der Vertikallinie V-V aufweist, wobei die Beleuchtungsvorrichtung (10) Folgendes umfasst:
- ein Leuchtmittel (100) zur Abstrahlung von Licht,
- eine Blende (200) mit einer Blendenkante (200a), wobei die Blende (200) derart angeordnet ist, dass die Blendenkante (200a) zur Erzeugung einer asymmetrischen Abblendlicht-Lichtverteilung (50) mitwirkt, und wobei die Blende (200) einen ersten und einen zweiten Blendenabschnitt (210, 220) umfasst, wobei der zweite Blendenabschnitt (220) zum ersten Blendenabschnitt (210) - gesehen in einem korrekt eingebauten Zustand der Beleuchtungsvorrichtung in einem Kraftfahrzeug - erhöht angeordnet ist, und wobei der erste und der zweite Blendenabschnitt (210, 220) durch einen Verbindungsabschnitt (230) der Blende (200) miteinander verbunden sind,
- ein Projektionsoptiksystem (300) umfassende eine optische Achse (A), welches Projektionsoptiksystem (300) eingerichtet ist, die durch die Blende (200) in Kombination mit dem Leuchtmittel erzeugte Abblendlicht-Lichtverteilung (50) in Richtung einer Hauptabstrahlrichtung (X) vor die Beleuchtungsvorrichtung (10) abzubilden,
der Verbindungsabschnitt (230) der Blende eine Ablenkfläche (240) mit einer Endkante (241) aufweist, welche Endkante (241) einen Abschnitt der Blendenkante (200a) der Blende (200) bildet,
wobei zur Hauptabstrahlrichtung (X) eine erste virtuelle Achse (y) orthogonal angeordnet ist, wobei die erste virtuelle Achse (y) - gesehen in einem korrekt eingebauten Zustand der Beleuchtungsvorrichtung - in einer Horizontalebene angeordnet ist,
**dadurch gekennzeichnet, dass**
die Ablenkfläche (240) sich entlang einer Ebene erstreckt, wobei die Ebene einen Flächenvektor (A) aufweist, welcher Flächenvektor (A) gesehen in Hauptabstrahlrichtung (X) einen ersten Winkel (W1) von 1° bis 3°, vorzugsweise von 2°, zur ersten Achse (y) einschließt, und gesehen entlang der ersten Achse (y) einen zweiten Winkel (W2) von 1° bis 3°, vorzugsweise von 2°, zur Hauptabstrahlrichtung (X) einschließt, um zumindest einen Teil des Lichts des Leuchtmittels (100), welches auf die Ablenkfläche (240) einfällt, in Richtung des Bereichs (51) unterhalb des Schnittpunkts HV bis zumindest -3° entlang der Vertikallinie V-V zu lenken.

2. Beleuchtungsvorrichtung nach Anspruch 1, **dadurch gekennzeichnet, dass** die Blendenkante (200a) eine Asymmetriekante aufweist, welche zur Erzeugung des asymmetrischen Anstiegs in der Abblendlicht-Lichtverteilung (50) mitwirkt, wobei die Endkante (241) der Ablenkfläche (240) die Asymmetriekante der Blendenkante (200a) bildet.

3. Beleuchtungsvorrichtung nach Anspruch 1 oder 2, **dadurch gekennzeichnet, dass** sich der erste und der zweite Blendenabschnitt (210, 220) jeweils - gesehen in einem korrekt eingebauten Zustand der Beleuchtungsvorrichtung in einem Kraftfahrzeug - im Wesentlichen in einer Horizontalebene erstrecken, wobei der erste und der zweite Blendenabschnitt (210, 220) einen Versatz entlang einer zweiten virtuellen Achse (z) aufweisen, wobei die zweite virtuelle Achse (z) orthogonal zur ersten virtuellen Achse (y) und der Hauptabstrahlrichtung (X) angeordnet ist.

4. Beleuchtungsvorrichtung nach einem der Ansprüche 1 bis 3, **dadurch gekennzeichnet, dass** die Ablenkfläche eine Seitenkante (242) aufweist, welche den zweiten Blendenabschnitt (220) abschnittsweise begrenzt und die Endkante (241) schneidet, wobei die Seitenkante (242) einen dritten Winkel (W3) mit der optischen Achse (A) des Projektionsoptiksystems (300) von 15° bis 20° einschließt.

5. Beleuchtungsvorrichtung nach einem der Ansprüche 1 bis 4, **dadurch gekennzeichnet, dass** die Längserstreckung des Verbindungsabschnitts (230) entlang der Hauptabstrahlrichtung (X) zumindest ein Drittel, vorzugsweise zumindest ein Viertel, der Brennweite des Projektionsoptiksystems (300) beträgt.

6. Beleuchtungsvorrichtung nach einem der Ansprüche 1 bis 5, **dadurch gekennzeichnet, dass** das Leuchtmittel (100) aus mehreren Leuchtdioden ausgebildet ist.

7. Beleuchtungsvorrichtung nach einem der Ansprüche 1 bis 6, **dadurch gekennzeichnet, dass** das Leuchtmittel (100) eine oder mehrere Vorsatzoptiken, vorzugsweise Kollimatoren zur Parallelisierung von Lichtstrahlen, umfasst.

8. Beleuchtungsvorrichtung nach einem der Ansprüche 1 bis 4, **dadurch gekennzeichnet, dass** sich der Bereich (51) der homogenen Lichtverteilung in der Abblendlicht-Lichtverteilung (50) unterhalb des Schnittpunkts HV sich entlang der Horizontallinie H-H von zumindest -4° bis zumindest +4° erstreckt.

9. Kraftfahrzeugscheinwerfer umfassend zumindest eine Beleuchtungsvorrichtung (10) nach einem der Ansprüche 1 bis 8.

## Claims

1. Lighting device (10) for a motor vehicle headlamp for producing an asymmetrical low beam light distribution (50), the low beam light distribution (50) having a homogeneous light distribution in the region (51) below the intersection HV of the horizontal line H-H and the vertical line V-V of a measuring screen for measuring a light distribution up to at least -3° along the vertical line V-V, the lighting device (10) comprising the following
- a light source (100) for emitting light,
- a diaphragm (200) having a diaphragm edge (200a), wherein the diaphragm (200) is arranged such that the diaphragm edge (200a) cooperates to produce an asymmetric low beam light distribution (50), and wherein the diaphragm (200) comprises a first and a second diaphragm section (210, 220), wherein the second diaphragm section (220) is elevated relative to the first diaphragm section (210), as seen in a correctly installed state of the lighting device in a motor vehicle, and wherein the first and second diaphragm sections (210, 220) are connected to each other by a connecting section (230) of the diaphragm (200),
- a projection optics system (300) comprising an optical axis (A), which projection optics system (300) is set up to image the low beam light distribution (50) generated by the diaphragm (200) in combination with the light source in the direction of a main radiation direction (X) in front of the lighting device (10),
the connecting section (230) of the diaphragm has a deflecting surface (240) with an end edge (241), which end edge (241) forms a section of the diaphragm edge (200a) of the diaphragm (200),
wherein a first virtual axis (y) is arranged orthogonally to the main radiation direction (X), wherein the first virtual axis (y) - viewed in a correctly installed state of the lighting device - is arranged in a horizontal plane,
**characterized in that**
the deflection surface (240) extends along a plane, the plane having a surface vector (A), which surface vector (A) includes a first angle (W1) of 1° to 3°, preferably of 2°, relative to the first axis (y) when viewed in the main radiation direction (X), and a second angle (W2) of 1° to 3°, preferably of 2°, relative to the first axis (y) when viewed along the first axis (y), preferably of 2°, to the main radiation direction (X) in order to direct at least part of the light of the illuminant (100), which is incident on the deflection surface (240), in the direction of the region (51) below the intersection point HV to at least -3° along the vertical line V-V.

2. Lighting device according to claim 1, **characterized in that** the diaphragm edge (200a) has an asymmetrical edge which contributes to generating the asymmetrical rise in the low beam light distribution (50), the end edge (241) of the deflection surface (240) forming the asymmetrical edge of the diaphragm edge (200a).

3. Lighting device according to claim 1 or 2, **characterized in that** the first and the second aperture sections (210, 220) each extend - as seen in a correctly installed state of the lighting device in a motor vehicle - essentially in a horizontal plane, the first and the second aperture sections (210, 220) having an offset along a second virtual axis (z), the second virtual axis (z) being arranged orthogonally to the first virtual axis (y) and the main radiation direction (X).

4. Lighting device according to one of claims 1 to 3, **characterized in that** the deflection surface has a side edge (242) which delimits the second aperture section (220) in sections and intersects the end edge (241), the side edge (242) enclosing a third angle (W3) with the optical axis (A) of the projection optics system (300) of 15° to 20°.

5. Lighting device according to one of claims 1 to 4, **characterized in that** the longitudinal extent of the connecting section (230) along the main radiation direction (X) is at least one third, preferably at least one quarter, of the focal length of the projection optics system (300).

6. Lighting device according to one of claims 1 to 5, **characterized in that** the light source (100) is formed from a plurality of light-emitting diodes.

7. Lighting device according to one of claims 1 to 6, **characterized in that** the light source (100) comprises one or more attachment optics, preferably collimators for parallelizing light beams.

8. Lighting device according to one of claims 1 to 4, **characterized in that** the region (51) of the homogeneous light distribution in the low beam light distribution (50) below the intersection point HV extends along the horizontal line H-H from at least -4° to at least +4°.

9. Motor vehicle headlamp comprising at least one lighting device (10) according to any one of claims 1 to 8.

## Revendications

1. Dispositif d'éclairage (10) pour un projecteur de véhicule automobile destiné à produire une répartition asymétrique de la lumière de croisement (50), la répartition de la lumière de croisement (50) présentant une répartition homogène de la lumière dans la zone (51) située en dessous du point d'intersection HV de la ligne horizontale H-H et de la ligne verticale V-V d'un écran de mesure destiné à mesurer une répartition de la lumière jusqu'à au moins -3° le long de la ligne verticale V-V, le dispositif d'éclairage (10) comprenant :
- un moyen d'éclairage (100) pour émettre de la lumière,
- un diaphragme (200) avec un bord de diaphragme (200a), le diaphragme (200) étant disposé de telle sorte que le bord de diaphragme (200a) contribue à la production d'une répartition asymétrique de la lumière de croisement (50), et le diaphragme (200) comprenant une première et une deuxième section de diaphragme (210, 220), dans lequel la deuxième section de diaphragme (220) est disposée de manière surélevée par rapport à la première section de diaphragme (210) - vue dans un état correctement installé du dispositif d'éclairage dans un véhicule automobile - et dans lequel les première et deuxième sections de diaphragme (210, 220) sont reliées entre elles par une section de liaison (230) du diaphragme (200),
- un système optique de projection (300) comprenant un axe optique (A), lequel système optique de projection (300) est conçu pour reproduire la répartition de lumière de croisement (50) générée par le diaphragme (200) en combinaison avec le moyen d'éclairage dans la direction d'une direction de rayonnement principale (X) devant le dispositif d'éclairage (10),
la partie de connexion (230) du diaphragme présente une surface de déviation (240) avec un bord d'extrémité (241), lequel bord d'extrémité (241) forme une partie du bord d'ouverture (200a) du diaphragme (200),
dans lequel un premier axe virtuel (y) est disposé orthogonalement à la direction de rayonnement principale (X), le premier axe virtuel (y) - vu dans un état correctement installé du dispositif d'éclairage - étant disposé dans un plan horizontal,
**caractérisé en ce que**
la surface de déviation (240) s'étend le long d'un plan, le plan ayant un vecteur de surface (A), lequel vecteur de surface (A), vu dans la direction de rayonnement principale (X), forme un premier angle (W1) de 1° à 3°, de préférence de 2°, par rapport au premier axe (y), et vu le long du premier axe (y), forme un deuxième angle (W2) de 1° à 3°, de préférence de 2°, par rapport à la direction principale d'émission (X), afin de diriger au moins une partie de la lumière du moyen d'éclairage (100) qui est incidente sur la surface de déviation (240) vers la zone (51) située en dessous du point d'intersection HV jusqu'à au moins -3° le long de la ligne verticale V-V.

2. Dispositif d'éclairage selon la revendication 1, **caractérisé en ce que** le bord du diaphragme (200a) présente un bord asymétrique qui participe à la génération de la montée asymétrique dans la répartition de la lumière de croisement (50), le bord d'extrémité (241) de la surface de déviation (240) formant le bord asymétrique du bord du diaphragme (200a).

3. Dispositif d'éclairage selon la revendication 1 ou 2, **caractérisé en ce que** les première et deuxième portions de diaphragme (210, 220) s'étendent chacune - vues dans un état correctement monté du dispositif d'éclairage dans un véhicule automobile - sensiblement dans un plan horizontal, les première et deuxième portions de diaphragme (210, 220) présentant un décalage selon un deuxième axe virtuel (z), le deuxième axe virtuel (z) étant orthogonal au premier axe virtuel (y) et à la direction principale d'émission (X).

4. Dispositif d'éclairage selon l'une des revendications 1 à 3, **caractérisé en ce que** la surface de déviation présente un bord latéral (242) qui délimite par sections la deuxième section de diaphragme (220) et coupe le bord d'extrémité (241), le bord latéral (242) formant un troisième angle (W3) de 15° à 20° avec l'axe optique (A) du système optique de projection (300).

5. Dispositif d'éclairage selon l'une des revendications 1 à 4, **caractérisé en ce que** l'extension longitudinale de la portion de liaison (230) le long de la direction principale de rayonnement (X) est au moins égale à un tiers, de préférence au moins égale à un quart, de la distance focale du système optique de projection (300).

6. Dispositif d'éclairage selon l'une des revendications 1 à 5, **caractérisé en ce que** le moyen d'éclairage (100) est formé de plusieurs diodes électroluminescentes.

7. Dispositif d'éclairage selon l'une des revendications 1 à 6, **caractérisé en ce que** le moyen d'éclairage (100) comprend une ou plusieurs optiques additionnelles, de préférence des collimateurs pour la parallélisation des rayons lumineux.

8. Dispositif d'éclairage selon l'une des revendications 1 à 4, **caractérisé en ce que** la zone (51) de répartition homogène de la lumière dans la répartition de la lumière de croisement (50) en dessous du point d'intersection HV s'étend le long de la ligne horizontale H-H d'au moins -4° à au moins +4°.

9. Projecteur de véhicule automobile comprenant au moins un dispositif d'éclairage (10) selon l'une quelconque des revendications 1 à 8.
